# EUROPÄISCHE PATENTANMELDUNG

(11) **EP 1 291 125 A2**
(43) Veröffentlichungstag der Anmeldung: **12.03.2003**
(21) Anmeldenummer: 02019267.0
(22) Anmeldetag: 28.08.2002
(51) Int. Cl.: B23Q 3/155

(54) **Verfahren zum Bestücken von Werkzeugmagazinen einer Vorrichtung zum Bearbeiten von Werkstücken**

(30) Priorität: 11.09.2001 DE 10144605
(71) Anmelder: Gebr. Heller Maschinenfabrik GmbH, D-72622 Nürtingen (DE)
(72) Erfinder: Kurz, Artur, 73240 Wendlingen (DE); Liebrich, Wolfgang, 73110 Hattenhofen (DE)
(74) Vertreter: Kohl, Karl-Heinz

(57) **Zusammenfassung**

Um einen raschen Werkzeugwechsel zu erreichen, werden während der Maschinenhauptzeit Werkzeuge (8, 9) aus einem Hauptmagazin (2, 3) in ein Zwischenmagazin gefördert. Beim Werkzeugwechsel werden die in den Hauptspindeln (12, 13) befindlichen Werkzeuge (8, 9) im Zwischenspeicher abgelegt und neue Werkzeuge vom Zwischenspeicher aufgenommen. Eine Produktion während der Bestükkung des Hauptmagazins ist nicht möglich. Um die Produktionskapazität zu erhöhen, wird während der Bestückung des ersten Werkzeugmagazins (2) die Werkstückbearbeitung durch die zweite Spindel (13) und während der Bestückung des zweiten Werkzeugmagazines (3) die Werkstückbearbeitung durch die erste Spindel (12) aufrecht erhalten. Das Verfahren kann zum Bestücken der Werkzeugmagazine (2, 3) von zweispindeligen Bearbeitungszentren (1) eingesetzt werden.

## Beschreibung

Die Erfindung betrifft ein Verfahren zum Bestücken von Werkzeugmagazinen einer Vorrichtung zum Bearbeiten von Werkstücken nach dem Oberbegriff des Anspruches 1 bzw. 3.

Es sind zweispindelige Werkzeugmaschinen bekannt (DE 198 51 264), die ein ringförmiges Werkzeughauptmagazin und zwei jeweils einer Spindel zugeordnete Werkzeugzwischenspeicher aufweisen. Um den Werkzeugwechsel zu beschleunigen, werden während der Maschinenhauptzeit Werkzeuge aus dem Hauptmagazin in die Zwischenmagazine gefördert. Beim Werkzeugwechsel werden die in den Hauptspindeln befindlichen Werkzeuge im Zwischenspeicher abgelegt und neue Werkzeuge im Pick up-Verfahren vom Zwischenspeicher aufgenommen. Aufgrund der geringen Kapazität des Zwischenspeichers von etwa zwei Werkzeugen pro Spindel ist eine Produktion während der Bestückung des Hauptmagazins nicht möglich.

Es ist ferner eine zweispindelige Werkzeugmaschine bekannt (DE 195 03 482), deren beide Spindeln unabhängig voneinander verfahrbar sind und mit denen alternierend ein auf einem Werkstücktisch befindliches Werkstück bearbeitet wird. Während eine Spindel am Werkstück arbeitet, wird an der anderen Spindel ein neues Werkzeug eingewechselt. Beide Spindeln greifen auf ein gemeinsames kettenförmiges Werkzeugmagazin zu. Während des Bestückens des Werkzeugmagazins kann an dieser Werkzeugmaschine nicht gearbeitet werden.

Bei einer anderen bekannten Werkzeugmaschine (DE 199 20 224) sind beide Spindeln unabhängig voneinander bewegbar. Jeder Spindel ist ein separates Werkzeugmagazin zugeordnet, aus dem die Werkzeuge im Pick up-Verfahren entnommen werden. Während der Magazinbestückung ist eine Bearbeitung der Werkstücke nicht vorgesehen.

Ferner sind einspindelige Bearbeitungszentren bekannt, die eine Werkzeugschleuse aufweisen, in welche während des Ablaufs eines Fertigungsprogramms Werkzeuge eingeschoben werden können. Eine Werkzeugwechselvorrichtung vermag gerade dann, wenn sie zum Transport eines Werkzeuges zur Hauptspindel nicht benötigt wird, Werkzeuge aus der Werkzeugschleuse zum jeweiligen Speicherplatz zu transportieren.

Der Erfindung liegt die Aufgabe zugrunde, das gattungsgemäße Verfahren so auszubilden, daß die Produktionskapazität der Maschine erhöht wird.

Diese Aufgabe wird beim gattungsgemäßen Verfahren erfindungsgemäß mit den kennzeichnenden Merkmalen des Anspruches 1 bzw. 3 gelöst.

Beim erfindungsgemäßen Verfahren nach Anspruch 1 werden die beiden Werkzeugmagazine nacheinander bestückt. Während der Bestückung des ersten Werkzeugmagazins kann die zweite Spindel, welcher das zweite Werkzeugmagazin zugeordnet ist, am Werkstück die Bearbeitung weiterführen. Ist das erste Werkzeugmagazin bestückt, erfolgt die Bestückung des zweiten Werkzeugmagazins. Während dieses Bestückungsvorganges kann die erste Spindel am Werkstück weiterarbeiten. Durch die Aufrechterhaltung der Produktion während des Bestückungsvorganges wird die Produktionskapazität der Maschine erhöht, ohne daß zusätzliche Baugruppen eingesetzt werden müssen. Unter Bestückung ist das Entnehmen der Werkzeuge aus dem Magazin sowie das Einsetzen von Werkzeugen in das Werkzeugmagazin zu verstehen.

Beim erfindungsgemäßen Verfahren nach Anspruch 3 werden beide Werkzeugmagazine gleichzeitig beladen, wodurch ebenfalls die Produktionskapazität der Maschine erhöht wird.

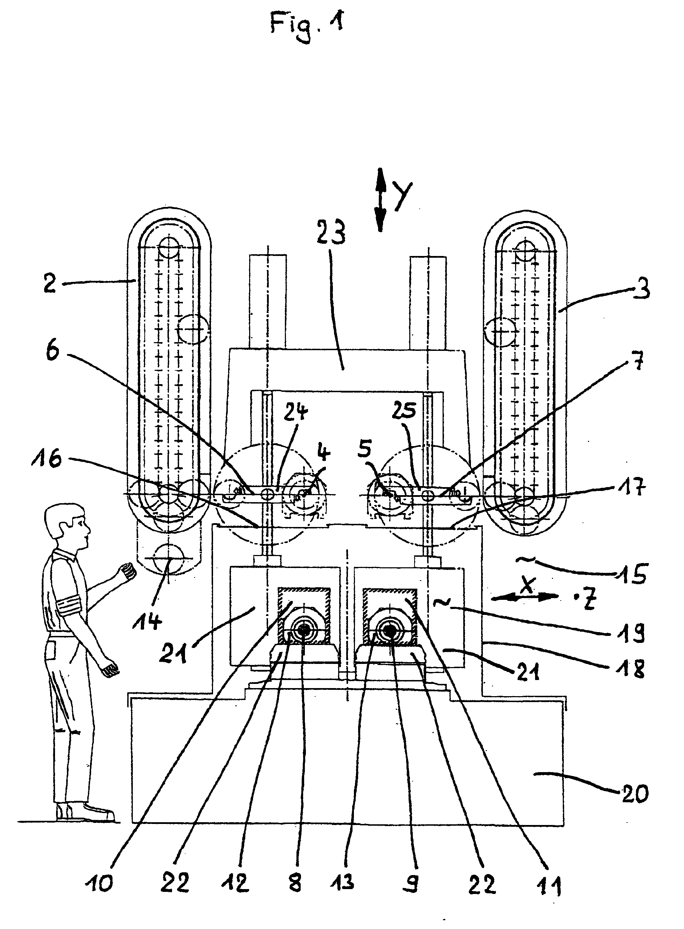

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispiels näher erläutert. Diese Zeichnung zeigt in Vorderansicht eine Vorrichtung 1, die im Ausführungsbeispiel als zweispindeliges Bearbeitungszentrum ausgebildet ist. Es hat ein Maschinengestell 20 mit einem Maschinenständer 23, an dem zwei Schlitten 21 in Y-Richtung verfahrbar angeordnet sind. Die beiden Schlitten 21 tragen Spindelköpfe 12, 13, die unabhängig voneinander bewegbar sind und jeweils ein Werkzeug 8, 9 tragen. Die Spindelköpfe 12, 13 sind aus Pinolenspindeln ausgeführt und in Z-Richtung verfahrbar. Die Spindelachsen liegen waagerecht. Die waagerechte Lage der Spindelachsen und damit auch der Werkzeugachsen hat den Vorteil, daß eine stabile Führung der Schlitten 21 erreicht wird und die Werkstückbeladung von oben erfolgen kann.

Der Maschinenständer 23 wird auf dem Maschinengestell 20 längs (nicht dargestellter) Führungen in X-Richtung verfahren. Im Bereich vor den Spindelköpfen 12, 13 ist das Maschinengestell 20 mit je einem Werkstückträger 22 versehen, auf denen die zu bearbeitenden Werkstücke 10, 11 unmittelbar festgespannt werden. Der Maschinenständer 23 ist in X-Richtung senkrecht zur Z- und zur Y-Richtung am Maschinengestell 20 relativ zum Werkstück 10, 11 verfahrbar.

Den Spindeln der Spindelköpfe 12, 13 ist jeweils ein Werkzeugmagazin 2, 3 zugeordnet, das in bekannter Weise ausgebildet ist und in einer Vertikalebene liegt. Jedes Werkzeugmagazin 2, 3 ist endlos umlaufend ausgebildet und enthält die entsprechenden Werkzeuge 8, 9. Zum Werkzeugwechsel wird der entsprechende Spindelkopf 12, 13 durch Verfahren in Y- und Z-Richtung zu einem zugehörigen Werkzeugwechsler 6, 7 gefahren und dort das gerade benutzte Werkzeug 8, 9 durch Schwenken um 180° durch ein neues Werkzeug aus dem Werkzeugmagazin 2, 3 ersetzt. Das entsprechende Werkzeug wird dem Spindelkopf 12, 13 mit dem Werkzeugwechsler 6, 7 übergeben, der einen um eine in Z-Richtung liegende Achse schwenkbaren Doppelgreifer 24, 25 aufweist. Die Ausbildung und Funktionsweise eines solchen Werkzeugwechslers 6, 7 ist bekannt und wird darum nicht näher beschrieben.

Durch die Werkzeugwechsler 6, 7 sind sehr kurze Span-zu-Span-Zeiten möglich, weil die Zeit zur Auswahl der Werkzeuge durch Verfahren des Werkzeugmagazins 2, 3 in die Hauptzeit der Maschine fällt. In vorteilhafter Weise greift sich der Doppelgreifer 24, 25 des Werkzeugwechslers 6, 7 das Werkzeug 8, 9 nicht direkt aus dem Werkzeugmagazin 2, 3, sondern aus einer Bereitstellungsposition 4, 5.

Die beiden in Y- und Z-Richtung unabhängig voneinander beweglichen Spindelköpfe 12, 13 bzw. die in sie eingespannten Werkzeuge 8, 9 bearbeiten im Normalbetrieb jeweils identische Werkstücke 10, 11. Die beiden Werkzeugmagazine 2, 3 bevorraten identische Werkzeugsätze. Mit den Doppelgreifern 24, 25 werden die Werkzeuge 8, 9 in bekannter Weise gewechselt. Wird das Standzeitende der Werkzeugsätze erreicht, so verfährt beispielsweise zunächst der Spindelkopf 12 in Y-Richtung in die Bereitstellungs- bzw. Werkzeugwechselposition 4. Zuvor muß eine Schutzklappe 16 einer Schutzverkleidung 18 geöffnet werden, welche den Arbeitsraum des Bearbeitungszentrums 1 umschließt. Ist der Spindelkopf 12 in die Werkzeugwechselposition 4 gefahren, wird das Werkzeug 8 vom Doppelgreifer 6 erfaßt, der um die in Z-Richtung liegende Achse geschwenkt wird und dieses Werkzeug an das Werkzeugmagazin 2 übergibt. Zum Schutz des Spindelkopfes 12 vor Verschmutzung wird nun eine (nicht dargestellte) Spindelverschlußkappe eingewechselt und mit dem Schlitten 21 in Y-Richtung zurück in den Arbeitsraum 19 verfahren. Die Schutzklappe 16 kann anschließend geschlossen werden. Der Spindelkopf 12 führt entweder die zur Bearbeitung des Werkstückes 10 programmierten Abläufe aus, ohne das Werkstück 10 zu bearbeiten, oder der Spindelkopf 12 wird stillgesetzt.

Der Maschinenbediener kann nunmehr das Werkzeugmagazin 2 in einer Bestückungsposition 14 mit den entsprechenden Werkzeugen bequem bestücken. Während des Bestückungsvorganges bearbeitet das Werkzeug 9 des Spindelkopfes 13 das Werkstück 11. In dieser Bestückungsphase arbeitet das Bearbeitungszentrum 1 nun mit halber Produktionskapazität.

Nach Beendigung der Bestückung kann mit dem Werkzeugwechsler 6 ein neues Werkzeug in den Spindelkopf 12 eingewechselt werden, wenn dieser wieder nach oben in die Werkzeugwechselposition 4 gefahren ist. Nach dem Einwechseln des Werkzeuges fährt der Spindelkopf 12 nach unten und nimmt die Arbeit am Werkstück 10 auf.

Nunmehr kann das Werkzeugmagazin 3 in analoger Weise bestückt werden. Der Spindelkopf 13 wird mit dem Schlitten 21 nach Öffnen der Schutzklappe 17 der Schutzverkleidung 18 nach oben in die Bereitstellungs- bzw. Werkzeugwechselposition 5 gefahren. Das im Spindelkopf 13 eingespannte Werkzeug 9 wird von dem als Doppelgreifer ausgebildeten Werkzeugwechsler 7 aufgenommen und in bekannter Weise im Werkzeugmagazin 3 abgelegt. Zum Schutz des Spindelkopfes 13 bzw. seiner Spindel vor Verschmutzung wird mit dem Werkzeugwechsler 7 eine Spindelverschlußkappe eingewechselt. Der Spindelkopf 13 kann nunmehr in den Arbeitsraum 19 in Y-Richtung nach unten zurückgefahren und die Schutzklappe 17 geschlossen werden. Der Spindelkopf 13 führt dann entweder die zur Bearbeitung des Werkstückes 11 programmierten Abläufe aus, ohne das Werkstück 11 zu bearbeiten, oder er wird stillgesetzt. Der Maschinenbediener kann nunmehr das Werkzeugmagazin 3 in Bestükkungsposition 15 bestücken. Während des Bestückungsvorganges bearbeitet der Spindelkopf 12 mit dem Werkzeug 8 weiterhin die Werkstücke 10. Auch hier arbeitet das Bearbeitungszentrum 1 mit halber Produktionskapazität weiter. Nach Beendigung des Bestükkungsvorganges wird das Werkzeugmagazin 3 zurück in die Ausgangslage gefahren und der Spindelkopf 13 in die Werkzeugwechselposition 7 nach oben bewegt. Mit dem Werkzeugwechsler 7 kann nunmehr aus dem neu bestückten Werkzeugmagazin 3 das entsprechende Werkzeug 9 in den Spindelkopf 13 eingewechselt werden. Der Spindelkopf 13 kann dann wieder zurück in den Arbeitsraum fahren und die Werkstücke 11 bearbeiten. Das Bearbeitungszentrum 1 arbeitet nun wieder mit voller Produktionskapazität, d.h. im Normalbetrieb.

Der Maschinenbediener ist während des Bestückens der Werkzeugmagazine 2, 3 vom Arbeitsraum 19 durch die Schutzverkleidung 18 getrennt, so daß der Maschinenbediener während des Bestückungsvorganges durch den im Arbeitsraum 19 parallel ablaufenden Bearbeitungsvorgang nicht gefährdet ist.

Durch die Aufrechterhaltung der Produktion während der Bestückung des jeweiligen Werkzeugmagazins 2 bzw. 3 wird die Produktionskapazität des Bearbeitungszentrums 1 erhöht, ohne daß zusätzliche Baugruppen eingesetzt werden müssen. Unter Bestückung wird das Entnehmen von Werkzeugen aus dem Magazin sowie das Einsetzen von Werkzeugen in das Magazin verstanden. Während der Bestükkung der Werkzeugmagazine 2, 3 werden Produktionskapazitäten erzielt, die bis zu 50 % der Produktionskapazität im Normalbetrieb betragen. Im Vergleich zu bekannten Verfahren, bei denen während der Bestückung der Werkzeugmagazine eine Bearbeitung der Werkstücke 10, 11 nicht stattfindet, stellt dies eine erhebliche Verbesserung dar.

Die Erhöhung der Produktionskapazität über den gesamten Fertigungsprozeß hängt quantitativ von verschiedenen Faktoren ab, zum Beispiel von der Dauer oder den Intervallen der Werkzeugmagazinbestückung. Auch die Art der Werkstückbeladung beeinflußt die Erhöhung der Produktionskapazität. Werden die Werkstücke 10, 11 automatisch geladen, kann der Maschinenbediener die Werkzeugmagazinbestückung rasch vornehmen, so daß die Aufnahme des Normalbetriebes des Bearbeitungszentrums 1 schnell möglich ist. Müssen die Werkstücke 10, 11 von Hand beladen werden, muß hierfür die Werkzeugbestückung unterbrochen werden, sobald ein bearbeitetes Werkstück 10, 11 entspannt und ein neu zu bearbeitendes Werkstück aufgespannt werden muß. Dadurch verlängert sich der Bestückungsvorgang, und der Zeitpunkt für die Aufnahme des Normalbetriebes des Bearbeitungszentrums 1, also die Bearbeitung mittels beider Spindelköpfe 12, 13, wird verzögert. Die Erhöhung der Produktionskapazität ist dann niedriger als bei automatischer Werkstückbeladung, im Vergleich zu herkömmlichen Verfahren, bei denen während der Werkzeugmagazinbestückung eine Bearbeitung der Werkstücke nicht möglich ist, stellt dies immer noch eine beträchtliche Produktionskapazitätserhöhung dar.

Mit dem beschriebenen Verfahren wird die Produktionskapazität des Bearbeitungszentrums 1 bei nur geringfügig höheren Investitionskosten gesteigert. Zur Durchführung des beschriebenen Verfahrens ist nur ein Maschinenbediener erforderlich.

Es ist aber auch möglich, beide Werkzeugmagazine 2, 3 gleichzeitig zu beladen. In diesem Falle ist ein zweiter Maschinenbediener notwendig.

Mit den beiden Spindelköpfen 12, 13 bzw. den Werkzeugen 8, 9 können identische Werkstücke 10, 11 mit parallelen und identischen Abläufen bearbeitet werden. Es ist aber auch möglich, ein Werkstück von beiden Spindeln alternierend zu bearbeiten, wobei jedes Werkzeugmagazin 2, 3 einen einheitlichen Werkzeugsatz enthält. Dann kann bei der Bestückung des einen Werkzeugmagazins die Produktion aufrechterhalten werden.

Es ist schließlich möglich, ein Werkstück von beiden Spindeln gleichzeitig bearbeiten zu lassen. Auch in diesem Falle ist ein einheitlicher Werkzeugsatz pro Werkzeugmagazin 2, 3 vorgesehen.

## Patentansprüche

1. Verfahren zum Bestücken von Werkzeugmagazinen einer Vorrichtung zum Bearbeiten von Werkstücken, mit wenigstens zwei, wenigstens in einer Achse voneinander unabhängig beweglichen Spindeln, denen jeweils wenigstens ein Werkzeugmagazin zugeordnet ist,
**dadurch gekennzeichnet, daß** während der Bestückung des ersten Werkzeugmagazins (2) die Werkstückbearbeitung durch die zweite Spindel (13) und während der Bestückung des zweiten Werkzeugmagazins (3) die Werkstückbearbeitung durch die erste Spindel (12) aufrechterhalten wird.

2. Verfahren nach Anspruch 1,
**dadurch gekennzeichnet, daß** die Bestückung der beiden Werkzeugmagazine (2, 3) durch eine Bedienungsperson erfolgt.

3. Verfahren zum Bestücken von Werkzeugmagazinen einer Vorrichtung zum Bearbeiten von Werkstücken, mit wenigstens zwei, wenigstens in einer Achse voneinander unabhängig beweglichen Spindeln, denen jeweils wenigstens ein Werkzeugmagazin zugeordnet ist,
**dadurch gekennzeichnet, daß** die Werkzeugmagazine (2, 3) gleichzeitig bestückt werden.

4. Verfahren nach Anspruch 3,
**dadurch gekennzeichnet, daß** jedem Werkzeugmagazin (2, 3) eine Bedienungsperson zugeordnet ist.

5. Verfahren nach einem der Ansprüche 1 bis 4,
**dadurch gekennzeichnet, daß** die Werkzeugmagazine (2, 3) zum Bestückungsvorgang in eine Bestückungsposition (14, 15) gefahren werden.

6. Verfahren nach einem der Ansprüche 1 bis 5,
**dadurch gekennzeichnet, daß** mit den Spindeln (12, 13) jeweils identische Werkstücke (10, 11) parallel und identisch bearbeitet werden.

7. Verfahren nach einem der Ansprüche 1 bis 5,
**dadurch gekennzeichnet, daß** ein Werkstück (10) von beiden Spindeln (12, 13) abwechselnd bearbeitet wird.

8. Verfahren nach Anspruch 7,
**dadurch gekennzeichnet, daß** die den Spindeln (12, 13) zugeordneten Werkzeugmagazine (2, 3) einen einheitlichen Werkzeugsatz enthalten.

9. Verfahren nach einem der Ansprüche 1 bis 5,
**dadurch gekennzeichnet, daß** ein Werkstück (10) von beiden Spindeln (12, 13) gleichzeitig bearbeitet wird.

10. Verfahren nach Anspruch 9,
**dadurch gekennzeichnet, daß** die den Spindeln (12, 13) zugeordneten Werkzeugmagazine (2, 3) einen einheitlichen Werkzeugsatz enthalten.
